# EUROPEAN PATENT SPECIFICATION

(11) **EP 1 202 182 B1**
(45) Date of publication and mention of the grant of the patent: **20.02.2008**
(21) Application number: 01000513.0
(22) Date of filing: 28.09.2001
(51) Int. Cl.: G06F 13/28

(54) **Apparatus and method for an interface unit for data transfer between a host processor and a digital signal processor in the asynchronous transfer mode**
Anordnung und Verfahren für eine Schnittstelleneinheit um Daten zwischen einem Hauptprozessor und einem digitalen Signalprozessor im asynchronen Übertragungsmodus zu übertragen
Méthode et dispositif d'unité d'interface pour transférer des données entre un processeur principal et un processeur de signaux numériques en mode de transfert asynchrone

(30) Priority: 02.10.2000 US 237237
(43) Date of publication of application: 02.05.2002
(73) Proprietor: Texas Instruments Incorporated, Dallas, Texas 75251 (US)
(72) Inventor: ANJANAIAH, Shaku, 77477, Stafford (US)
(74) Representative: Holt, Michael

(56) References cited:
- EP-A- 0 852 357
- EP-A- 1 037 150
- WO-A-00/22784
- PMC-SIERRA PM7339 DATASHEET, [Online] May 2000, Retrieved from the Internet: <URL:http://www.pmc-sierra.com/products/det ails/pm7339/> [retrieved on 2005-05-19]
- INTERSIL 82C37A DMA CONTROLLER, [Online] March 1997, Retrieved from the Internet: <URL:http://www.intersil.com/data/fn/fn2967 .pdf> [retrieved on 2005-05-19]

## Description

### TECHNICAL FIELD OF THE INVENTION

This invention relates generally to data processing systems and, more particularly, to data processing systems having a host processor and at least one digital signal processor. An interface unit is inserted between the host processor and the digital signal processor(s) to facilitate the exchange of data there between.

### DESCRIPTION OF THE RELATED ART

As the requirements for computational power have increased, one data processing system that has been increasing employed to meet these requirement includes a host processing system that controls one or more digital signal processors. The host processor is typically a microprocessor, but can be a digital signal processor. The host processor has the flexibility to respond to a wide variety of conditions and provide an appropriate response. The digital signal processors provide specialized capabilities that permit complex but repetitive tasks to be performed very rapidly. Thus, one or more digital signal processing units, operating under control of a master processing unit, can respond to a wide variety of computational intensive requirements. However, the host processor and the digital signal processor(s) may not be directly compatible and may even be fabricated by different manufacturers. In order to permit the interchange of data between incompatible components or components which can exchange data with difficulty, standard signal protocols have been agreed upon to provide the requisite commonality. As an example, the asynchronous transfer mode defines signals that facilitate the exchange of data signal groups between a host processor and a digital signal processor. A protocol has been provided for the Universal Test and Operations Phy Interface (UTOPIA) for the asynchronous transfer mode (ATM) (UTOPIA) Level 2 Interface to conform to the ATM Forum standard specification af-phy-0039.000 as well as other applicable standards. The UTOPIA protocol defines the interface between the Physical Layer (PHY) and the upper layer module such as the ATM Layer and various management entities. This definition allows a common PHY in ATM systems across a wide range of speeds and media types. The ATM cell or packet that is transferred in this protocol includes 53 bytes with a 5 byte header and a 48 byte payload in an 8-bit transfer mode, or 54 bytes with a 6 byte header and a 48 byte payload in a 16-bit transfer mode.

The UTOPIA protocol defines the exchange of data signals between master processing unit and the slave processing unit. An interface unit must be provided to buffer the data that are typically exchanged between a (relatively low-speed) communication bus and a direct memory access unit associated with the digital processing unit. In addition, to the transmit and receive functions that must be performed by the interface unit, a common configuration requires that one of the processing unit of the system operate in a master state while one or more processing units coupled thereto have a slave status.

An interface unit which implements the Utopia protocol as described above is the PMC device PM7339, that data transfer by using event signal control may be effected within a DMA controller is evident from the INTERSIL device 82c37A and its associated data sheet.

The present invention provides a Utopia interface device of extended capability by exploiting external DMA buffering.

### SUMMARY OF THE INVENTION

The present invention provides apparatus as set forth in the claims.

### BRIEF DESCRIPTION OF THE DRAWINGS

For a more complete understanding of the present invention, and the advantages thereof, reference is now made to the following detailed description of certain particular and illustrative embodiments and the features and aspects thereof, by way of example only, and with reference to the figures of the accompanying drawings in which:
Figure 1 is a block diagram of the general data processing system capable of advantageously using the present invention.
Figure 2 is a block diagram illustrating the signals generated by and signals received by the asynchronous transfer mode interface unit in the slave-transmit state according to the present invention.
Figure 3 is a timing diagram for the signals received by and generated by the asynchronous transfer mode interface unit in the slave-transmit state shown in Fig. 2 according to the present invention.
Figure 4 is a block diagram illustrating the signals generated by and received by the asynchronous transfer mode interface unit in the slave-receive state according to the present invention.
Figure 5 a timing diagram for the signals received by and generated by the asynchronous transfer mode interface unit in the slave-receive state mode shown in Fig. 4 according to the present invention.
Figure 6 is a block diagram illustrating the signals generated by and received by the asynchronous transfer mode interface unit in the master-transmit state according to the present invention.
Figure 7 is a timing diagram for the signals received by and generated by the asynchronous transfer mode interface unit in the master-transmit state mode shown in Fig. 6 according to the present invention.
Figure 8 is a block diagram illustrating the signals generated by and received by the asynchronous transfer mode interface unit in the master-receive state according to the present invention.
Figure 9 is a timing diagram for the signals received by and generated by the asynchronous transfer mode interface unit in the slave-receive state mode shown in Fig. 8 according to the present invention.
Figure 10A illustrates the asynchronous transfer mode Utopia protocol signals with a master-state data processing unit in a transmit mode and a plurality of slave-state data processing units in a receive mode.
Figure 10B illustrates the asynchronous transfer mode Utopia protocol signals with a master-state data processing unit is a receive mode and a plurality of slave-state data processing units in a transmit mode.
Figure 11 is a block diagram of an implementation of the Utopia interface unit according to the present invention
Figure 12 illustrates the contents of the interface control register according to the present invention
Figure 13 is a flow chart illustrating the operation of an EVENT signal in the Utopia interface slave transmit mode according to present invention.
Figure 14 is a flow chart illustrating the operation of an EVENT signal in the Utopia interface slave receive mode.

### DESCRIPTION OF THE PREFERRED EMBODIMENTS

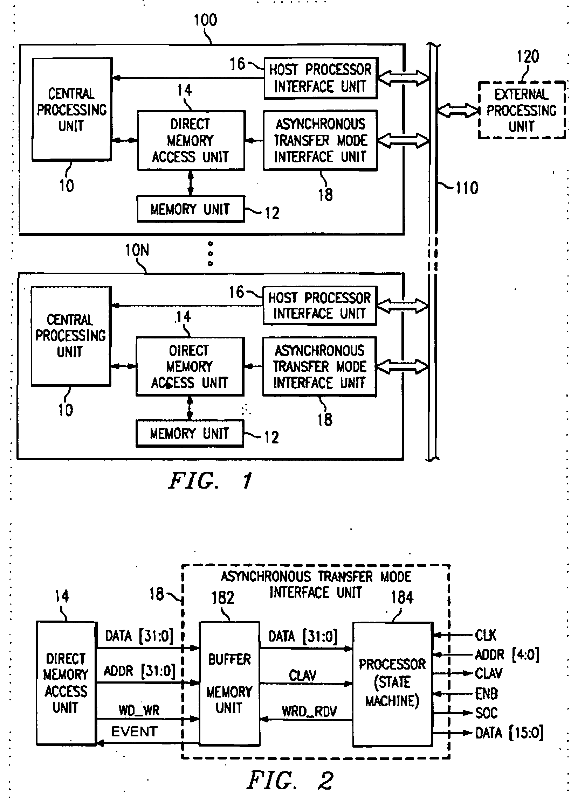

Referring to Fig. 1, a block diagram of the data processing system 1 capable of advantageously incorporating the present invention is shown. The data processing system includes at least one digital signal processing unit 100 through 10N, a communication bus 110, and a master processing unit 120. Each digital signal processing unit 100 through 10N includes a central processing unit (or digital signal processing unit core) 10, memory unit 12, a direct memory access unit 14, and a UTOPIA interface unit 18. The interface unit 18 of each digital signal processing unit 100 through 10N exchanges signals with the bus 110. Master processing unit 120 also exchanges signals with the communication bus 110. The interface unit 18 exchanges signals with the direct memory access unit 14. The direct memory access unit 14 exchanges signals with the memory unit 12 and, subsequently, with the core processing unit 10. Note that the master processing unit 120 can be digital processing unit such digital signal processing unit 100.

Referring to Table 1, the required signals for the ATM Forum Technical Committee's UTOPIA Level 2, Version 1.0 (af-phy-0039.000) are listed. Note that optional signals, not included in Table 1, are identified.

**Table 1**

| Signal Name | ATM Controller | ATM Controller |
|---|---|---|
| | Master (Dir) | Slave (Dir) |
| Transmission Mode | | |
| UXCLK | In | In |
| UXADDR {4:0} | Out | In |
| UXCLAV | In | Out |
| UXENB | Out | In |
| UXSOC | Out | Out |
| UXDATA {15:0} | Out | Out |

| Receive Mode | | |
|---|---|---|
| URCLK | In | In |
| URADDR {4:0} | Out | In |
| URCLAV | In | Out |
| URENB | Out | In |
| URSOC | In | In |
| URDATA {15:0} | In | In |

In the transmit slave mode, the Utopia signals have the following meaning. The UXCLK signal is a clock input signal driven by the master processing unit. The UXDATA signals and the transmit control signals are synchronized with this UXCLK signal. The UXADDR {4:0} is 5-bit address signal group generated by the master processing unit. This address signal group is used to select one of a plurality (up to 31) slave processing units in the system. The UXCLAV signal is a transmit cell available status output signal of the slave processing unit. For a cell level handshake, a 0 logic level indicates that the slave interface unit does not have a complete data cell for transmission, while a logic 1 indicates that the slave interface unit has a complete data cell to transmit. The UXENB signal is a transmit interface enable signal input signal. This signal is asserted low by the master processing unit to indicate that the slave processing unit should apply the first byte of valid data and the UXSOC (start-of-cell) signal in the next clock cycle. The UXSOC signal is the start of cell signal (active high) that is generated by the slave processing unit on the rising edge of the UXCLK signal to indicate that the first valid byte of the cell is available on the transmit data bus. The UXDATA {15:0} signals are provided by the slave processing unit during the transmission of on the transmit data bus on the UXCLK rising edge.

In the receive slave mode, the URCLK signal is a clock signal applied to the interface unit by the master processing unit. The receive data and control signals are sampled and are synchronous to this clock signal. The URADDR {4:0} signals are applied to the interface unit by the master processor and identify one of the slave units (up to 31) in the system. The URCLAV signal is the receive cell available output signal from the slave interface unit to indicate that the slave interface unit has space available to receive a cell from the master processing unit. In the handshake procedure, the 0 logic bit indicates that no space is available to receive a data cell from the master processing unit. The 1 logic bit indicates that space is available to receive a data cell from the master processing unit. The URENB signal is an active low signal generated by the master processing unit to enable the receive interface of the slave processor. This signal indicates that the slave interface unit is to sample URDATA signal and the URSOC signal during the next clock cycle or thereafter. The URSOC signal is generated by the master processing unit and indicates that the first valid byte of the data cell is available on the receive data bus for the slave processor to sample. The URDATA {15:0} signals are applied by the master processor to the data receive bus and sampled on the rising edge of the CLK signal.

As can be seen from Table 1, in the master mode, the UXCLAV/URCLAV and the UXENB/URENB signals are reversed in direction when compared to the counterpart slave signals. The reversal in direction is the result of the different role played by a master mode interface unit and a slave mode interface unit. Similarly, the UXADDR and URADDR signals have reversed directions between the master mode and the slave mode resulting from the fact that the polling takes place from the master mode. The interpretation of the signals remains the same.

Referring to Fig. 2, the signals applied to and generated by the UTOPIA interface unit 18 in the slave transmit mode are shown. The interface unit 18 includes two components, a processor 184 acting as a state machine, and a buffer memory unit 182. The processor 184 receives the UXCLK signal, the UXADDR {4:0} signal and the UXENB signal. The processor 184 generates the UXCLAV signal, the UXSOC signal and the UXDATA {15:0} signal. The processor 184 applies the WRD_RDY signal to the buffer memory unit and the processor 184 receives the DATA {31:0} signals and the CLAV signal from the buffer memory unit 184. The buffer memory unit 182 receives the WD_WR signal, the ADDR {31:0} signals, the data {31:0} signals and the ADDR {31:0} signals from the direct memory access unit 14. The buffer memory unit 182 applies the EVENT signal to the direct memory access unit 14.

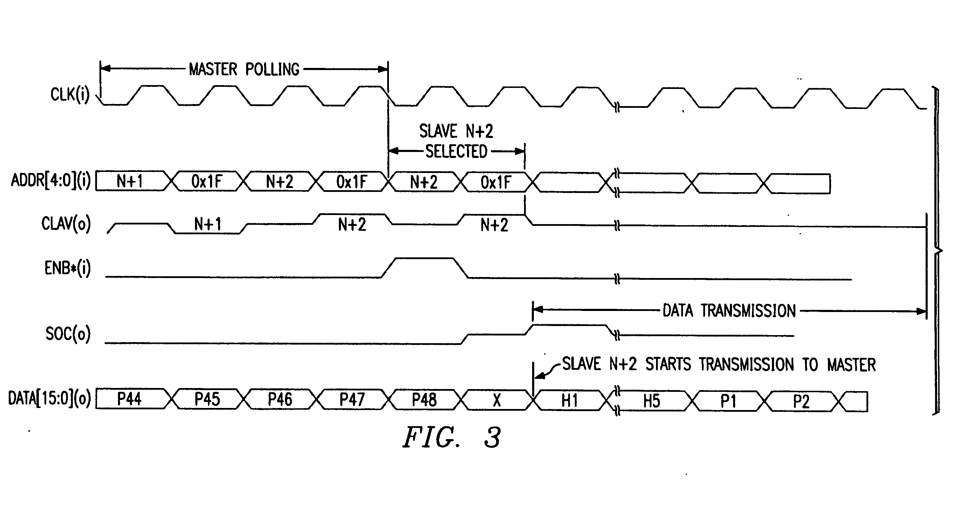

Referring to Fig. 3, a timing diagram illustrating the relationship of the signals for the asynchronous transfer mode interface unit 14 in the transmit-mode depicted in Fig. 2 are shown. The signals are synchronized by the UXCLK signal. When a slave mode asynchronous transfer mode interface unit 18 detects its address on the UXADDR {4:0} lines, the processor will provide a UXCLAV signal to indicate whether or not a cell is available for transmission. After completion of the current activity, the master processor generates the address signal group, UXADDR {4:0}, and the UXENB signal. The slave processor then transmits the data over the conductors carrying the DATA {15:0} signals and by asserting the UXSOC signal.

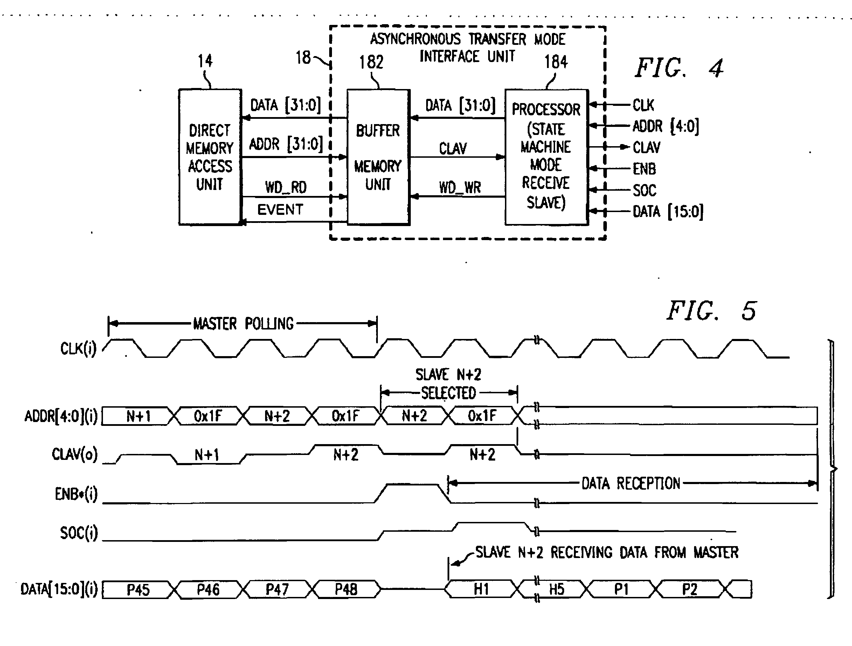

Referring to Fig. 4, the exchange of signals between the interface unit 18 and the master processing unit and between the interface unit 18 and the direct memory access unit 14 is shown. The processor 184 of the interface unit 18 receives the URCLK signal, the URADDR {4:0} signals, the URENB signal, the URSOC signal, and the URDATA {15:0} signals from the master processing unit. The processor 184 applies the URCLAV to the master processing unit. The processor 184 applies the DATA {31:0} signals and the WD_WR to the buffer memory unit 182 and processor 184 receives the CLAV signal from the buffer memory unit 182. The buffer memory unit 182 applies the DATA {31:0} signals and the EVENT signal to the direct memory access unit 14 and the buffer memory unit 182 receives the ADDR {31:0} signals and the WD_RD signal from the direct memory access unit 14. In the slave receive mode, the DATA signals are transferred by the processor 184 to the buffer memory unit 182, and then to the direct memory access unit 14. The CLAV signal and the WD_WR signal permit the DATA signals to be transferred through the processor 184 to the buffer memory unit 182. The WD_RD signal permits the DATA signals to be transferred from the buffer memory unit 182 to the direct memory access unit 14

Referring to Fig. 5, a timing diagram illustrating the relationship of the signals for the asynchronous transfer mode interface unit 14 in the receive-mode depicted in Fig. 4 are shown. The signals are synchronized by the URCLK signal. The master processor applies the ADDR {4:0} signal group to the slave processors. The identified slave processor responds to the ADDR {4:0} signal with the appropriate CLAV signal. When an active CLAV signal is applied, the ADDR {4:0} signals are reapplied along with the ENB signal. The slave starts receiving data along with an SOC signal. The DATA {15:0} signals continue to be received until the cell has been completely transferred.

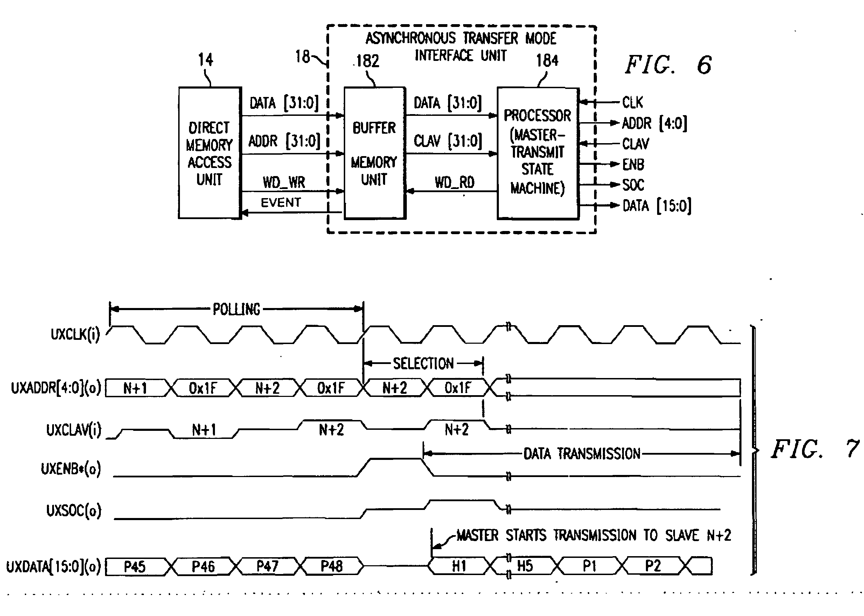

Referring to Fig. 6, the signals exchanged by the interface unit 18 in the master-transmit mode is shown. The processor 184 of the interface unit 18 receives the UXCLK signal and the UXCLAV signal. The interface unit 184 applies the UXADDR [4:0] signals, the UXENB signal, the UXSOC signal, and the UXDATA {15:0} signals to the slave processing unit. The processor 184 applies the WD_RD signal to the buffer memory unit 182 and processor 184 receives the DATA {31:0} signals and the CLAV signals from the buffer memory unit 182. The buffer memory unit 182 applies the EVENT signal to the direct memory access unit 14 and the buffer memory unit 182 receives the DATA {31:0} signals, the ADDR {31:0} signals, and the WD_WR signal from the direct memory access unit 14. In the master-state transmit state the DATA signals are transmitted from the direct memory access unit 14 to the buffer out memory unit 182, and then through the processor 184 to the external component. The WD_WR signal permits the DATA signals to be transmitted from the direct memory access unit 14 to the buffer memory unit 182. The CLAV signal and the WR_RD signal permit the DATA signals to be transferred from the buffer memory unit 182 to the processor 184 and, subsequently to the external component.

Referring to Fig. 7, the timing diagram for the Utopia interface unit in the master-transmit state of Fig. 6 is shown. The master-transmit state processor polls, with the UXADDR {4:0} signals, the slave devices in a round robin or in a fixed priority sequence. The processor 184 receives a UXCLAV signal, where appropriate, from a slave processor following the address, UXADDR {4:0} of the processor. The master-transmit processor then reapplies the address of the slave processor generating the UXCLAV signal along with the UXENB signal. During the next clock cycle, the processor begins transmission of the UXDATA {15:0} signals and the SOC signals to the slave processor. The transfer is continued until the entire cell has been transferred.

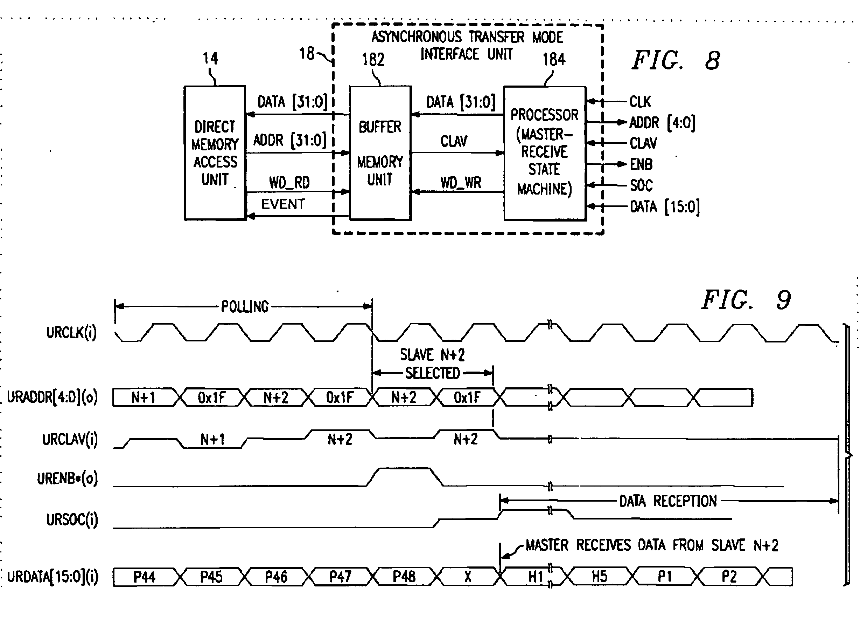

Referring to Fig. 8, the signals exchanged by the UTOPIA interface unit 18 in the master-receive mode are shown. The processor 184 of the interface unit 18 applies the URADDR {4:0} signals and the URENB signal to the slave processing unit and the processor 184 receives the URCLK signal, the URCLAV signal, the URSOC signal and the URDATA {15:0} signals from the slave processing unit. The processor 184 applies the DATA {31:0} signals and the WD_WR signals to the buffer memory unit 182 and the processor 184 receives the CLAV signal from the buffer memory unit 182. The buffer memory unit 182 applies the DATA {31:0} signals and the EVENT signal to the direct memory access unit 14 and the buffer memory unit 182 receives ADDR {31:0} signals and the WD_RD signal from the direct memory access unit 14.

Referring to Fig. 9, a timing diagram is shown for the signals of the asynchronous transfer mode interface unit in the master-receive state as illustrated in Fig. 8. The master processor 184 of polls the slave processors by applying the ADDR {4:0} signals to the address line. When a slave asynchronous transfer mode interface unit is available to receive the data signals, a CLAV signal is asserted during the next clock cycle. During the following clock cycle, the ADDR {4:0} signals of the slave unit generating the CLAV signal is reapplied to the bus along with the ENB signal. When a current interaction with the master processor is complete, the addressed slave processor transmits the DATA {31:0} signals and the SOC signal. The DATA {31:0} are transmitted until the entire cell has been transferred.

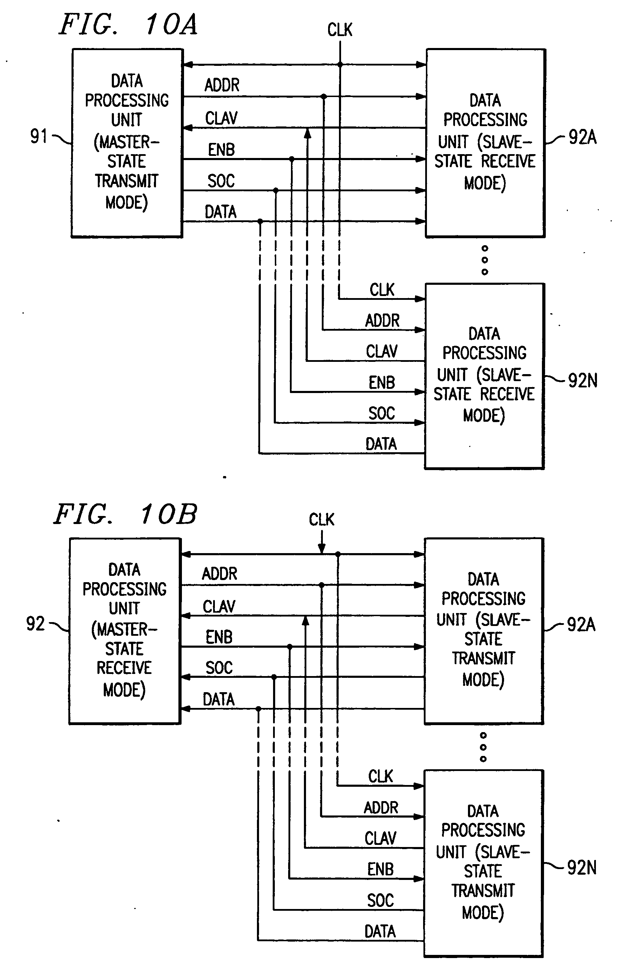

Referring to Fig. 10A and Fig. 10B, a data processing system is shown having a master-state data processing unit 91 and a plurality of slave-state data processing units 92A through 92N. In Fig. 10A, the master-state data processing unit 91 is in a transmit mode, while the slave-state data processing units 92A through 92N are in a receive mode. In Fig. 10B, the master-state data processing unit 91 is in a receive mode while the slave-state data processing units 92A through 92N are in a transmit mode. In Fig. 10A, the master data processing unit 91 (in the transmit mode) generates the UXCLK, the UXADDR, the UXENB, the UXSOC, and the UXDATA signals that which become the URCLK, the URADDR, the URENB, the URSOC, and the URDATA signals, respectively, when applied to the slave data processing units 92A-92N (in the receive mode). The URCLAV signals from the slave data processing units 92A-92N are applied to the master data processing unit 91 as the UXCLAV signal. In Fig. 10B, the master data processing unit 91 (in the receive mode) generates the URCLK, the URADDR, and the URENB signals that are applied to the slave data processing units 92A-92N (in the transmit mode) as the UXCLK, the UXADDR, and UXENB signal respectively. The slave data processing units 92A-92N generate the UXCLAV, the UXSOC, and the UXDATA signals that are applied to the master data processing unit 91 as the URCLAV, the URSOC, and the URDATA signals, respectively.

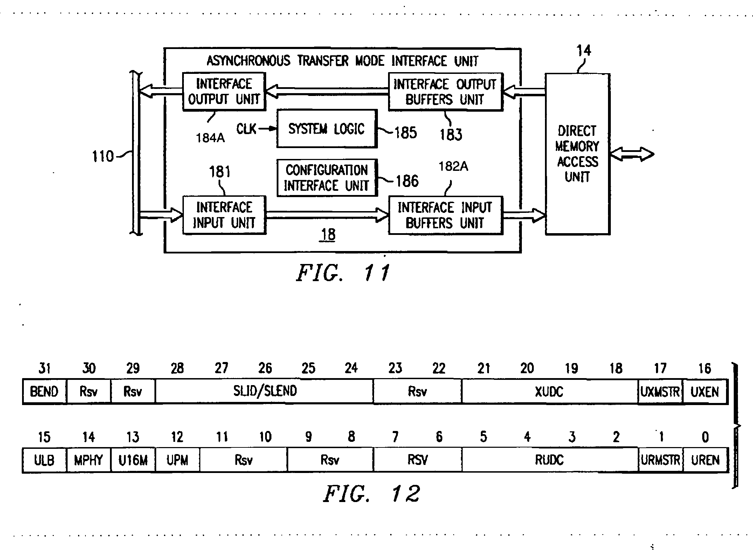

Referring to Fig. 11, the implementation of the UTOPIA interface unit between the communication bus 110 and the direct memory access unit 14, according to the present invention, is shown. Data from the communication bus 110 is transferred through the interface input unit 181 to the interface input buffer memory unit 182A. From the interface input buffer memory unit 182A, the data signals are transferred through the direct memory access unit 14 to the memory unit(s) of the digital signal processing unit chip 100. The data from the memory units is transferred through the direct memory access unit 14 to the interface output buffer memory unit 183. The data is transferred from the interface output buffer memory unit 183 through the interface output unit 184A to the communication bus 110. The system logic 186 receives the INTERNAL CLOCK signal (as distinguished from the UTOPIA CLK signal), reshapes and deskews waveform and distributes the CLOCK signal to the rest of the UTOPIA interface unit 18. The configuration interface unit 186 receives the initialization signals and, by transmission of control signals to the other units of the UTOPIA interface unit 18 determines the mode in which the UTOPIA interface unit 18 operates.

Referring to Fig. 12, the contents of the interface control register according to the preferred embodiment is shown. In the UREN/UXEN fields, a logic "0" indicates that the receive/transmit port is disabled, while a logic "1" indicates that the interface receive port is enabled. This designation is true in both the master and the slave modes. In the URMSTR/UXMSTR fields, a logic "0" indicates that the interface unit is operating in a slave (default) mode, while a logic "1" indicates that the interface unit is operating in a master mode. In the RUDC/XUDC fields, a user defined (i.e., standard or extended) data cell is specified for both the receive and the transmit operational modes. This field is used in the slave mode. In the SLID/SLEND field, this field identifies the address of the coupled processor unit in the slave mode. In the master mode, this field identifies the last of the processors coupled to the interface unit. In the UPM field, field identifies whether a polling takes place in a round-robin manner or from a fixed address. The U16M field determines whether data transfers are 8 bits or 16 bits for both the input and the output interfaces. The MPHY field determines whether the interface unit is coupled to a single processor (logic "0") or to multiple processors. The ULB field determines whether the interface unit is in a loop-back mode. In the loop-back mode (i.e., logic "1"), the receive and transmit sections are coupled and the master is determined by the URMSTR/UXMSTR fields. The BEND field determines the data transfer in a big endian or little endian format.

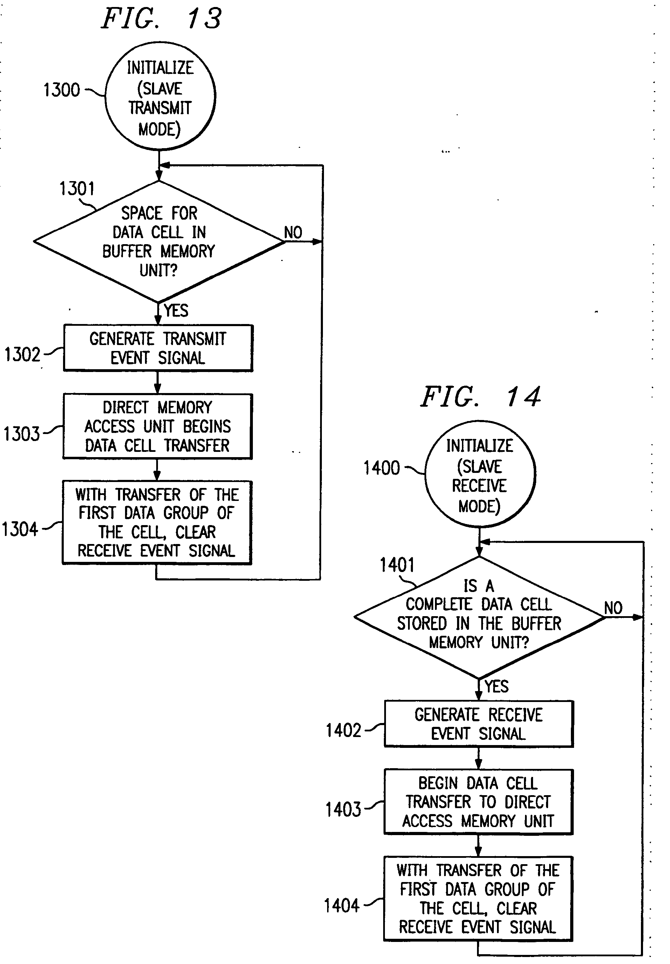

Referring to Fig. 13, the operation of the (transmit) EVENT signal is illustrated. After initialization of the transmit portion of the UTOPIA interface unit in step 1300 or as part of the continuing operation of the interface unit, a determination is made in step 1301 whether a space for the storage of a complete data cell is available in the transmit buffer memory unit or not. When the determination is that it is, then in step 1302 a transmit EVENT signal is applied to the direct memory access unit. In response to the generation of the EVENT signal, a data cell is transmitted through the direct memory access unit to the transmit buffer memory storage unit in step 1303. In step 1304, as soon as the transfer of the data cell has begun and the first word of the cell is written, the EVENT signal is cleared. Note that the EVENT signal is reasserted as soon as the first word is written and the buffer memory unit has space available. The immediate reassertion of the EVENT signal improves the interface unit throughput. The process than returned to step 1301 to determine whether space in the transmit buffer memory unit is available for storage of an entire data cell. When the determination is step 1301 is negative, the process returns to step 1301 and continues to cycle until space is available for the storage of an entire data cell.

Referring to Fig. 14, the operation of the event signal in the UTOPIA slave interface unit in the receive mode is illustrated. After initialization of the receive portion of the UTOPIA interface unit in step 1400 or as part of the operation of that portion of the interface unit, a determination is made whether a complete data cell is available in the receive buffer memory unit in step 1401. When the determination is yes, a receive EVENT signal is generated in step 1402. In response to the EVENT signal, the data cell in the receive buffer memory unit is transferred through the direct memory access unit instep 1403. In step 1404, as soon as the data cell transfer is begun with the reading of the first word, the EVENT signal is cleared. The process is then returned to step 1401 and is cycled until a complete data cell is stored in the receive buffer memory unit.

The asynchronous transfer mode interface unit of the present invention is the interface unit between the direct memory access unit and the data processing system. In general, all of the data processing units of a data processing system can include an asynchronous interface unit using the UTOPIA protocol that is coupled to a bus coupling the data processing units. In some implementations, the data processing unit itself can be implemented to provide the asynchronous transfer mode signals thereby obviating the need for the interface unit in that data processing system. The actual transfer of the data signals between data processing systems in the asynchronous transfer mode is under the control of the same clock or synchronized clock signals. The data cells or packets that have been transferred or that are to be transferred are stored in the buffer memory unit. The memory unit provides a buffer between the clock frequency of the communication bus and the much higher frequency of the direct memory access unit.

The foregoing description has described the interface unit as including a buffer memory unit. In the preferred embodiment, the buffer memory unit is implemented by a first-in/first out memory unit. The memory unit is provided with the capacity to store two data cells. The communication bus causes the signals to be exchanged between the master unit and the slave unit to have a relatively slow clock speed. Because of the relatively slow clock speed of the communication bus, the filling or emptying of the buffer memory in the direction of the communication will be much slower than the filling and the emptying of the buffer memory unit in the direction of the direct access memory unit.

The EVENT signal is particularly useful in the efficient transfer of data cells. Because the operation of the data processing system of which the UTOPIA interface is a part is much faster than the rate at which data can be transferred over the communication bus, the transfer of data cells out of the transmit buffer memory unit and into the receive buffer memory unit can be essentially continuous.

While one important application of the present invention is the transfer of data signals between a host or master-state data processing unit (that includes a microprocessor) and at least one slave-state data processing unit (that typically includes a digital signal processor), this configuration can be reversed. In addition, the UTOPIA transfer mode interface unit can be added to each or a series of digital signal processing units coupled by a bus. One of the digital signal processing unit is selected as being the master-state machine and this processing unit controls the operation of all the digital signal processors.

The Utopia interface unit identifies the transfer of an incomplete ATM cell, sometimes referred to as a runt cell, when the SOC signal is set during a ATM cell transfer. In the software resolution, the runt cell can be resolved by transferring the runt cell to a higher level software procedure. In the preferred embodiment, the runt cell is overwritten by new data under hardware control.

While the invention has been described with respect to the embodiments set forth above, the invention is not necessarily limited to these embodiments. Accordingly, other embodiments, variations, and improvements not described herein are not necessarily excluded from the scope of the invention. For example, one alternative embodiment might comprise a data processing system comprising: at least one slave-state data processing unit; a communication bus, the master-state data processing unit exchanging asynchronous transfer mode protocol signals with the bus; and a master-state data processing unit, the master-state data processing unit including: a central processing unit; a direct memory access unit coupled to the central processing unit, and a Utopia interface unit coupled to the central processing unit; the Utopia interface unit having: a processor coupled to the communication bus and exchanging asynchronous transfer mode protocol signals therewith; and a buffer memory unit, the buffer memory unit buffering data signals between the direct memory access unit and the processor.

Preferably this processor also includes: an input interface unit; and an output interface unit: and wherein the buffer memory unit includes; an input buffer memory unit; and an output buffer memory unit. Data is transferred from the communication bus through the input interface unit to the input buffer memory unit, and data is transferred from the output buffer memory unit through the output interface unit to the communication bus. The input buffer memory unit and the output buffer memory unit are first-in/first-out memory units.

## Claims

1. A data processing system comprising:
a first data processing unit (120);
a communication bus (110), the first data processing unit exchanging asynchronous transfer mode protocol signals on the bus, said signals including data signals defining data assembled into cells; and
at least one second data processing unit comprising:
a central processing unit (10);
a direct memory access unit (14) coupled to the central processing unit, and
a Utopia mode interface unit (18) coupled to the central processing unit and comprising:
a processor (184) coupled to the communication bus and exchanging Utopia protocol signals therewith; and
a buffer memory unit (182) for buffering data signals between the direct memory access unit and the processor, **characterized in that** the buffer memory unit comprises:
an input buffer memory unit (182A), wherein the transfer between the input buffer memory unit and the direct memory access unit is determined by a receive event signal, said receive event signal being generated (1402) when said input buffer memory has a complete data cell stored therein and cleared (1404) when transfer from the input buffer memory unit to said direct memory access unit is begun; and
an output buffer memory unit (183), wherein the transfer between the direct memory access unit and the output buffer memory unit is determined by a transmit event signal, said transmit event signal being generated (1302) when said input buffer memory has space for a complete data cell and cleared (1304) when transfer to the output buffer memory from said direct memory access unit is begun; the first processing unit acting in a master-mode
and each of the second processing units acting in a slave-mode.

2. The data processing system as recited in claim 1, wherein the buffer memory unit is a first-in/first-out memory unit.

3. The data processing system as recited in claim 1 or claim 2, wherein the processor comprises:
an input interface unit (181); and
an output interface unit (184A);

4. The data processing system as recited in claim 3, wherein the system is configured such that data is transferred from the communication bus to the input buffer memory unit, and wherein data is transferred from the output buffer memory unit to the communication unit through the output interface unit.

## Patentansprüche

1. Datenverarbeitungssystem, mit:
einer ersten Datenverarbeitungseinheit (120);
einem Kommunikationsbus (110), wobei die erste Datenverarbeitungseinheit auf dem Bus Signale gemäß einem Protokoll einer asynchronen Übertragungsbetriebsart austauscht, wobei die Signale Datensignale enthalten, die zu Zellen zusammengefügte Daten definieren; und
wenigstens einer zweiten Datenverarbeitungseinheit, die umfasst:
eine Zentraleinheit (10);
eine Direktspeicherzugriffseinheit (14), die mit der Zentraleinheit gekoppelt ist, und
eine Utopia-Betriebsart-Schnittstelleneinheit (18), die mit der Zentraleinheit gekoppelt ist und umfasst:
einen Prozessor (184), der mit dem Kommunikationsbus gekoppelt ist und mit ihm Signale gemäß einem Utopia-Protokoll austauscht; und
eine Pufferspeichereinheit (182) zum Puffern von Datensignalen zwischen der Direktspeicherzugriffseinheit und dem Prozessor,
**dadurch gekennzeichnet, dass** die Pufferspeichereinheit umfasst:
eine Eingangspufferspeichereinheit (182A), wobei die Übertragung zwischen der Eingangspufferspeichereinheit und der Direktspeicherzugriffseinheit durch ein Empfangsereignissignal bestimmt wird, wobei das Empfangsereignissignal erzeugt wird (1402), wenn in dem Eingangspufferspeicher eine vollständige Datenzelle gespeichert worden ist, und gelöscht wird (1404), wenn die Übertragung von der Eingangspufferspeichereinheit zu der Direktspeicherzugriffseinheit begonnen wird; und
eine Ausgangspufferspeichereinheit (183), wobei die Übertragung zwischen der Direktspeicherzugriffseinheit und der Ausgangspufferspeichereinheit durch ein Sendeereignissignal bestimmt wird, wobei das Sendeereignissignal erzeugt wird (1302), wenn der Eingangspufferspeicher Raum für eine vollsändige Datenzelle hat, und gelöscht wird (1304), wenn die Übertragung von der Direktspeicherzugriffseinheit zu dem Ausgangspufferspeicher begonnen wird;
wobei die erste Verarbeitungseinheit in einer Master-Betriebsart arbeitet und jede der zweiten Verarbeitungseinheiten in einer Slave-Betriebsart arbeitet.

2. Datenverarbeitungssystem nach Anspruch 1, wobei die Pufferspeichereinheit eine First-in/First-out-Speichereinheit ist.

3. Datenverarbeitungssystem nach Anspruch 1 oder Anspruch 2, wobei der Prozessor umfasst:
eine Eingangsschnittstelleneinheit (181); und
eine Ausgangsschnittstelleneinheit (184A).

4. Datenverarbeitungssystem nach Anspruch 3, wobei das System so konfiguriert ist, dass Daten von dem Kommunikationsbus zu der Eingangspufferspeichereinheit übertragen werden, und wobei Daten von der Ausgangspufferspeichereinheit zu der Kommunikationseinheit durch die Ausgangsschnittstelleneinheitübertragen werden.

## Revendications

1. Système de traitement de données comprenant :
une première unité de traitement de données (120) ;
un bus de communication (110), la première unité de traitement de données échangeant des signaux de protocole de mode de transfert asynchrone sur le bus, lesdits signaux comprenant des signaux de données définissant des données assemblées dans des cellules ; et
au moins une deuxième unité de traitement de données comprenant :
une unité centrale (10) ;
une unité d'accès direct à la mémoire (14) couplée à l'unité centrale, et
une Unité d'interface de mode Utopia (18) couplée à l'unité centrale et comprenant :
un processeur (184) couplé au bus de communication et échangeant des signaux de protocole Utopia avec celui-ci ; et
une unité de mémoire tampon (182) destinée à mettre en mémoire tampon des signaux de données entre l'unité d'accès direct à la mémoire et le processeur, **caractérisée en ce que** l'unité de mémoire tampon comprend :
une unité de mémoire tampon d'entrée (182A), dans laquelle le transfert entre l'unité de mémoire tampon d'entrée et l'unité d'accès direct à la mémoire est déterminé par un signal d'événement de réception, ledit signal d'événement de réception étant généré (1402) lorsque ladite mémoire tampon d'entrée possède une cellule de données complète stockée à l'intérieur et effacée (1404) lorsque le transfert de l'unité de mémoire tampon d'entrée à ladite unité d'accès direct à la mémoire est commencé ; et
une unité de mémoire tampon de sortie (183), dans laquelle le transfert entre l'unité d'accès direct à la mémoire et l'unité de mémoire tampon de sortie est déterminé par un signal d'événement de transmission, ledit signal d'événement de transmission étant généré (1302) lorsque la mémoire tampon d'entrée possède de l'espace pour une cellule de données complète et est effacée (1304) lorsque le transfert à la mémoire tampon de sortie depuis ladite unité d'accès direct à la mémoire est commencé ;
la première unité de traitement agissant dans un mode maître et chacune des deuxièmes unités de traitement agissant dans un mode esclave.

2. Système de traitement de données selon la revendication 1, dans lequel l'unité de mémoire tampon est une unité de mémoire premier entré/premier sorti.

3. Système de traitement de données selon la revendication 1 ou la revendication 2, dans lequel le processeur comprend :
une unité d'interface d'entrée (181) ; et
une unité d'interface de sortie (184A)

4. Système de traitement de données selon la revendication 3, dans lequel le système est configuré de telle sorte que des données sont transférées du bus de communication à l'unité de mémoire tampon d'entrée, et dans lequel des données sont transférées de l'unité de mémoire tampon de sortie à l'unité de communication par le biais de l'unité d'interface de sortie.
